# EUROPÄISCHE PATENTSCHRIFT

(11) **EP 1 286 070 B1**
(45) Veröffentlichungstag und Bekanntmachung des Hinweises auf die Patenterteilung: **14.01.2004**
(21) Anmeldenummer: 02017200.3
(22) Anmeldetag: 31.07.2002
(51) Int. Cl.: F16D 3/205

(54) **Tripodegelenk**
Tripod joint
Joint tripode

(30) Priorität: 23.08.2001 DE 10141439
(43) Veröffentlichungstag der Anmeldung: 26.02.2003
(73) Patentinhaber: DaimlerChrysler AG, 70567 Stuttgart (DE)
(72) Erfinder: Henkel, Jürgen, 71394 Kernen (DE); Münich, Peter, 70736 Fellbach (DE); Schröder, Rolf, 70619 Stuttgart (DE); Wörner, Günter, 71394 Kernen (DE)

(56) Entgegenhaltungen:
- US-A- 4 592 735
- US-A- 4 741 723
- US-A- 5 803 814

## Beschreibung

Die Erfindung betrifft ein Tripodegelenk gemäß dem Oberbegriff des Patentanspruchs 1.

Tripodegelenke finden beispielsweise Einsatz als Seitenwellen von Kraftfahrzeugen. Hierbei dienen die Tripodegelenke zur Übertragung von Antriebsmomenten zwischen zwei Antriebselementen eines Antriebsstranges. Mittels der Tripodegelenke ist der Ausgleich einer relativen Verschiebung sowie einer relativen Verschwenkung der Antriebselemente ermöglicht. Für den Einsatz bei Seitenwellen eines Kraftfahrzeuges sind derartige Relativbewegungen durch Einfederungen der Fahrzeugräder bedingt.

Aus der US 4 619 628 ist ein Tripodegelenk mit einem Gelenkaußenteil und einem in diesem aufgenommenen Gelenkinnenteil bekannt. Das Gelenkinnenteil verfügt über einen Tripodestern mit einen Kugelkörper aufweisenden Zapfen. Die Kugelkörper finden verschwenkbar in einer teilkugelförmigen Kugelkalotte eines Druckstückes Aufnahme und sind somit verschwenkbar gegenüber dem Druckstück gelagert. Das Druckstück verfügt auf der dem Kugelkörper abgewandten Seite über eine Lauffläche. Zwischen der Lauffläche und einer Gegenfläche des Gelenkaußenteiles sind zur Übertragung des Antriebsmomentes Wälzkörper angeordnet.

Der Erfindung liegt die Aufgabe zugrunde, ein hinsichtlich der der im Bereich der Laufflächen, der Gegenflächen und der Wälzkörper auftretenden Kräften optimiertes Tripodegelenk vorzuschlagen.

Ein Vorschlag zur Lösung der der Erfindung zugrundeliegenden Aufgabe ist gekennzeichnet durch die Merkmale des Patentanspruchs 1.

Die der Erfindung zugrundeliegenden Untersuchungen haben gezeigt, dass es insbesondere bei großen zu übertragenden Antriebsmomenten zu elastischen Verformungen der die Gegenflächen und die Laufflächen bildenden Bauteile kommt.

Beispielsweise biegt sich bei mittiger Krafteinleitung durch den Kugelkörper der in Laufrichtung auskragende Teilbereich der Lauffläche infolge der von den Wälzkörpern ausgeübten Reaktionskräfte durch. Hierdurch bedingt vergrößert sich (im Mikrometerbereich) in diesem Teilbereich der Abstand der Lauffläche von der zugeordneten Gegenfläche. Als Folge hiervon sinkt in den äußeren Teilbereichen der Lauffläche die zu übertragende Kraft ab. Es kommt zu einer inhomogenen Kraftverteilung über die Lauffläche. Bei vorgegebener maximaler Flächenpressung im Bereich maximaler Kräfte wird somit in den äußeren Teilbereichen die maximal zu übertragende Kraft nicht genutzt, während eine optimale Kraftverteilung nur bei kleinen Antriebsmomenten gegeben ist.

Erfindungsgemäß ist die Lauffläche des Druckstückes ist in Laufrichtung der Wälzkörper gekrümmt. Die Krümmung erfolgt derart, dass sich der Abstand der Lauffläche von der ebenen Gegenfläche in Richtung der äußeren Teilbereiche verringert. Die Krümmung ist derart dimensioniert, dass sich bei großen zu übertragenden Antriebsmomenten eine ungefähr ebene Lauffläche einstellt, so dass die zu übertragenden Kräfte für alle Wälzkörper ungefähr gleich sind.

Hierdurch werden sämtliche Wälzkörper gleichermaßen beansprucht, wodurch verbesserte Laufeigenschaften und ein verminderter Verschleiß bedingt ist. Die Flächenpressungen der Lauffläche und der Gegenfläche sind ebenfalls optimiert, so dass auch der Verschleiß dieser Betriebsflächen verringert wird. Bei gleichen Bauteildimensionen können die zu übertragenden Antriebsmomente vergrößert werden. Erfindungsgemäß wird für kleine Antriebsmomente somit eine ungleichförmige Kraftverteilung in Kauf genommen, während für große Antriebsmomente eine optimale Kraftverteilung erzielt werden kann. Als weiterer Vorteil der Erfindung kann das Druckstück mit geringerer Dicke ausgeführt sein, wobei elastische Verformungen des Druckstückes bewusst in Kauf genommen werden können und für große Belastungen durch die Krümmungen ausgeglichen werden. Hierdurch ergibt sich ein kompakter bauendes Tripodegelenk.

Eine besonders vorteilhafte Ausgestaltung der Erfindung ergibt sich, wenn die Lauffläche des Druckstückes im Einlaufbereich der Wälzkörper über Einlaufschrägen oder -radien verfügt. Hierdurch kann das Einfädeln der Wälzkörper in die Lauffläche und damit in den Kraftfluß verbessert werden. Neben einer Verringerung der mechanischen Beanspruchung der beteiligten Bauteile hat diese eine Verringerung von durch die Einfädelung auftretende Kraftsprüngen bei einer Verschiebung oder Verschwenkung des Tripodegelenkes zur Folge.

Vorteilhafte Ausgestaltungen ergeben sich aus den Unteransprüchen und der Beschreibung.

Bevorzugte Ausführungsbeispiele des erfindungsgemäßen Tripodegelenkes werden nachfolgend anhand der Zeichnung näher erläutert. In der Zeichnung zeigen:
- Fig. 1: ein Tripodegelenk im Längsschnitt,
- Fig. 2: ein Tripodegelenk im Querschnitt,
- Fig. 3: ein Druckstück eines erfindungsgemäßen Tripodegelenkes,
- Fig. 4: ein herkömmlich ausgebildetes Druckstück mit den im Betrieb auftretenden Übertragungskräften der Wälzkörper,
- Fig. 5: ein erfindungsgemäßes Druckstück mit den im Betrieb bei kleinen Antriebsmomenten auftretenden Übertragungskräften der Wälzkörper und
- Fig. 6: ein erfindungsgemäßes Druckstück mit den im Betrieb bei großen Antriebsmomenten auftretenden Übertragungskräften der Wälzkörper.

Ein Tripodegelenk 10 verfügt über ein Gelenkinnenteil 11 sowie ein dieses aufnehmendes Gelenkaußenteil 12. Das Gelenkinnenteil 11 sowie das Gelenkaußenteil 12 sind jeweils zumindest drehfest mit einem Antriebselement eines Antriebsstrang eines Kraftfahrzeuges verbunden, beispielsweise mit einer Antriebswelle und einem Fahrzeugrad. Das Tripodegelenk 10 dient einer Übertragung eines Antriebsmomentes zwischen dem Gelenkinnenteil 11 und dem Gelenkaußenteil 12 bei Gewährleistung einer relativen Verschiebung entlang der Längsachse 13-13 des Gelenkinnenteils 11 bzw. der Längsachse 14-14 des Gelenkaußenteils 12, einer relativen Verschenkung des Gelenkinnenteils 11 gegenüber dem Gelenkaußenteil 12, welche mit einer Veränderung des Winkels 15 zwischen den Längsachsen 13-13 und 14-14 einhergeht, sowie einer räumlichen Bewegung, welche sich aus einer Überlagerung der vorgenannten Bewegungsformen ergibt.

Das Gelenkinnenteil 11 verfügt am innenliegenden Ende über drei ein- oder mehrstückig mit diesem ausgebildete, radial orientierte und jeweils unter 120° in Umfangsrichtung verteilte Zapfen 16, welche einen Tripodestern bilden. Die Zapfen 16 weisen jeweils einen teilkugelförmigen Kugelkörper 17 auf. Der Kugelkörper 17 liegt zur Übertragung von Kräften in beide Umfangsrichtungen jeweils im Bereich der kugelförmigen Mantelfläche an einer korrespondierend ausgebildeten Ausnehmung 18 eines Druckstückes 19 an. Auf der gegenüberliegenden, einer ebenen Gegenfläche 20 des Gelenkaußenteiles 12 zugewandten Seite des Druckstückes 19 ist dieses mit einer Lauffläche 21 eben ausgebildet.

Zwischen der Lauffläche 21 und der Gegenfläche 20 sind zylinderförmige Wälzkörper 23, insbesondere Rollen oder Nadeln, unter Ausbildung eines Linienkontaktes aufgenommen. Mehrere Wälzkörper sind in einem Käfig 24 geführt. Zur Übertragung von Umfangskräften in die entgegengesetzte Richtung ist jeder Zapfen 16 mit zwei zugeordneten Druckstücken 19, den Wälzkörpern 23 und den Flächen 20, 21 symmetrisch zu einer die Längsachse 13-13 aufnehmenden Zapfenmittenebene ausgebildet.

Die Lauffläche 21 eines Druckstückes 19 hat vorzugsweise eine rechteckige Form, so dass möglichst viele Wälzkörper 23 bei Verringerung der Flächenpressung einen tragenden Kontakt ausbilden. Es sind jedoch auch kreisförmige oder ovale Druckstücke 19 möglich.

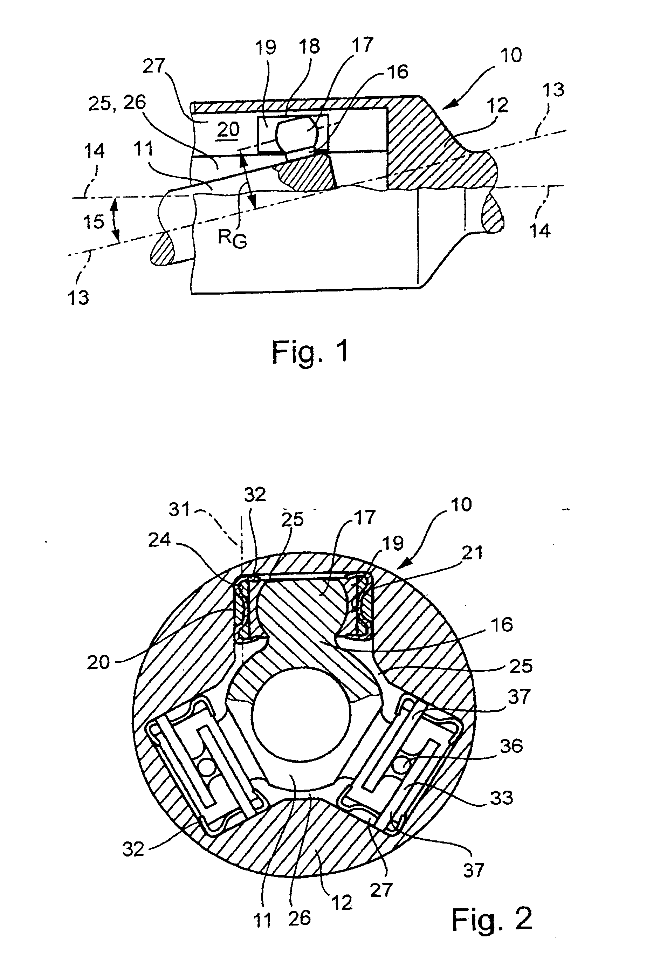

Das Gelenkaußenteil 12 verfügt über eine in Richtung der Längsachse 14-14 orientierte Ausnehmung 25 mit im wesentlichen kreisförmiger, mittiger Bohrung 26 sowie drei radial orientierten und jeweils unter 120° in Umfangsrichtung verteilten Aufnahmeräumen 27, die jeweils zur Aufnahme und Abstützung eines Zapfens 16, zweier Druckstücke 19 und von Wälzkörpern 23 dienen. Die Aufnahmeräume 27 verfügen in dem in Fig. 2 dargestellten Schnitt über eine im wesentlichen U-förmige, in Richtung der Bohrung 26 offene Kontur, wobei die Seitenschenkel der U-förmigen Kontur mit den Gegenflächen 20 gebildet sind. Im Ausführungsbeispiel gemäß Fig. 2 sind die Seitenschenkel geradlinig ausgebildet ohne übergangsbereich zu den Gegenflächen 20. In Richtung der Bohrung 26 verfügen die Seitenschenkel insbesondere über keine Vorsprünge oder Vertiefungen, sondern gehen im innenliegenden Endbereich mit einer Abstandvergrößerung in die Bohrung 26 über. Die Wälzkörper mit Käfig sind in der in Fig. 2 dargestellten Stellung des Tripodegelenkes radial beabstandet von dem Grundschenkel der U-förmigen Kontur angeordnet.

Gemäß Fig. 2 sind die Wälzkörper 23 in einem Käfig 24 geführt. In den Käfigen 24 sind die Wälzkörper 23 unter Gewährleistung der relativen Lage der Längsachsen 31 der Wälzkörper 23 zueinander geführt. Die Käfige 24 sind gegenüber dem Druckstück 19 in radialer Richtung über das Druckstück 19 umgreifende bzw. einschließende Schultern 32 geführt. Die Käfige 24 können über die Schultern 32 wie dargestellt auf das Druckstück 19 "geclipst" werden. Die Käfige 24 können weiterhin über Zentrier- oder Federelemente 33 in Laufrichtung der Wälzkörper 23 zentriert sein. Zwei Käfige 24 eines Zapfens 16 können über ein gemeinsames Federelement 33 geführt bzw. zentriert sein.

Je zwei einem Kugelkörper 17 für beide Umfangsrichtungen zugeordnete Druckstücke 19 können über zwei Verbindungsstege zu einem einstückig ausgebildeten Druckkörper verbunden. Eine Einführung des Kugelkörpers 17 in den einstückigen Druckkörper kann durch eine an sich bekannte Ausführung als Bajonett-Verbindung gewährleistet sein.

Gemäß dem Ausführungsbeispiel nach Fig. 2 sind zwei Federelemente 33 über jeweils ein Befestigungsmittel 36 mit den Druckstücken 19 oder dem Kugelkörper 17 verbunden. Die Federelemente 33 verfügen jeweils über zwei elastische Finger 37, welche zur Abstützung der gegenüberliegender Käfige 24 an diesen anliegen oder mit diesen verbunden sind.

Der Käfig 24 mit den Wälzkörpern hat gegenüber dem Kugelkörper 17 insbesondere ausschließlich zwei Freiheitsgrade: Infolge einer geeignet ausgewählten Verbindung des Kugelkörpers 17 mit den Druckstücken 19 ist eine Verschwenkbarkeit um eine Achse senkrecht zur durch die Längsachse 13-13 des Gelenkinnenteiles 11 und die Längsachse der Zapfen 16 aufgespannten Ebene gewährleistet. Der zweite Freiheitsgrad besteht in der translatorisch verschieblichen Verbindung zwischen Käfig 24 und Druckstücken 19. Zur Gewährleistung der Verschenkbarkeit des Druckstückes 19 gegenüber dem Kugelkörper 17 kann das Druckstück 19 den Kugelkörper 17 in einer Kugelkalotte aufnehmen.

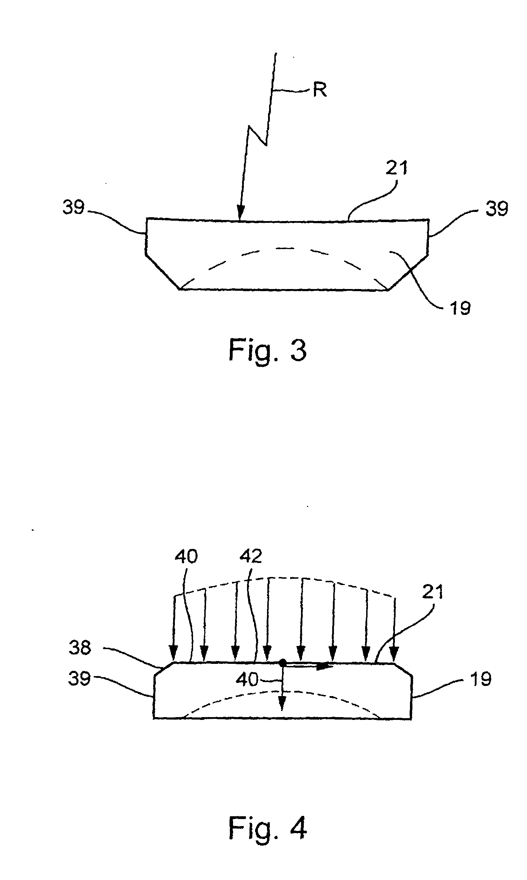

Gemäß Fig. 4 verfügt das Druckstück 19 über Übergangsbereiche 38 zwischen den Stirnflächen 39 und der Lauffläche 21. Im einfachsten Fall sind die Übergangsbereiche als Phase ausgebildet. Alternativ können diese kurvenförmig, insbesondere mit einem glatten Übergang in die Lauffläche 21, ausgebildet sein. Die Übergangsbereiche 38 verbessern den Einfädelvorgang der Wälzkörper 23 zwischen Lauffläche 21 und Gegenfläche 20 während des Betriebes des Tripodegelenkes 10.

Fig. 4 zeigt ein herkömmliches Druckstück 19 mit im unbelastetem Zustand ebener Lauffläche 21. Infolge der Belastung bei der Übertragung großer Antriebsmomente kommt es zu elastischen Verformungen der äußeren Teilbereiche 40 des Druckstückes in Richtung 41, also weg von der zugeordneten Gegenfläche 20. Als Folge der Durchbiegung und des in den äußeren Teilbereichen 40 vergrößerten Abstandes zwischen Gegenfläche 20 und Lauffläche 21 sinkt in den äußeren Teilbereichen 40 die übertragene Kraft ab.

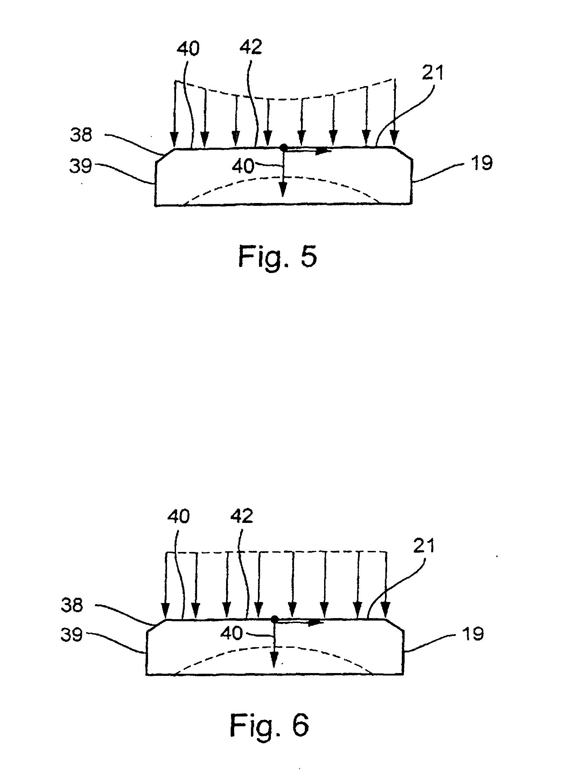

Für die erfindungsgemäße Ausgestaltung zeigt Fig. 5 die Kraftverteilung für kleine Antriebsmomente. Infolge der Krümmung der Lauffläche 21, welche von der Mitte in Laufrichtung entgegen der Richtung 40 orientiert ist, ist der Abstand der Lauffläche 21 von der zugeordneten Gegenfläche 20 in den äußeren Teilbereichen 40 geringer als von den inneren Teilbereichen 42. Demgemäß sind die in den äußeren Teilbereichen 40 zu übertragenden Kräfte größer als in den inneren Teilbereichen 41.

Für die erfindungsgemäße Ausgestaltung zeigt Fig. 6 die Kraftverteilung für große Antriebsmomente. Die Krümmung der Lauffläche 21 wird durch die elastischen Verformungen des Druckstückes 19 ausgeglichen. Somit sind sämtliche Teilbereiche 40, 42 der Lauffläche 21 ungefähr gleich beabstandet von den Gegenflächen 20. Die in den Teilbereichen 40, 42 auftretenden Kräfte sind ungefähr gleichförmig verteilt.

Die notwendige Krümmung der Lauffläche 21 ist idealerweise durch eine Finite-Element-Berechnung des Lauffläche-Wälzkörper-Gegenfläche-Systems für die anzunehmenden Antriebsmomente zu ermitteln. In erster Näherung hat sich eine kreisbogenförmige Krümmung der Laufflächen 21 mit einem Radius R gemäß Fig. 3 als vorteilhaft erwiesen. Der Unterschied der Abstände mittiger Teilbereiche 42 der Lauffläche 21 und äußerer Teilbereiche 40 von der Gegenfläche 20 liegt hierbei im Mikrometerbereich. Von einer Kreisbogenform abweichende Krümmungen der Lauffläche 21 sind ebenfalls möglich. Alternativ oder zusätzlich zu der gekrümmten Lauffläche ist auch eine gekrümmte Ausbildung der Gegenfläche möglich.

Die erfindungsgemäße Ausgestaltung eignet sich für jedwede Ausgestaltungsform eines Tripodegelenkes, bei welchen in den Kraftfluß ein Druckstück zwischengeschaltet ist. Lediglich beispielhaft wird auf die US 4 619 628, DE 28 16 646 C2 oder die US 4 708 693 verwiesen.

Die Wälzkörper 23 können im Käfig 24 mit parallelen Längsachsen 31 der Wälzkörper 23 oder unter einem spitzen Winkel zueinander geneigten Längsachsen 31 geführt sein.

Bei ebener Ausbildung der Gegenflächen 20 sind die Wälzkörper vorzugsweise als Zylinderrollen mit gleichen Radiuen ausgebildet, so dass die dem Druckstück 19 zugewandten Kontaktflächen der Wälzkörper 23 in einer Ebene liegen.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile sind den in den Zeichnungen dargestellten Geometrien der Vorrichtungsteile zu entnehmen.

Bei ebener Ausbildung der Gegenflächen 20 sind die Wälzkörper vorzugsweise als Zylinderrollen mit gleichen Radien ausgebildet, so dass die dem Druckstück 19 zugewandten Kontaktflächen der Wälzkörper 23 in einer Ebene liegen.

## Patentansprüche

1. Tripodegelenk zur Übertragung eines Antriebsmomentes zwischen zwei Antriebselementen eines Antriebsstranges mit einem Gelenkinnenteil (11) und mit einem das Gelenkinnenteil aufnehmenden Gelenkaußenteil (12), wobei
a) das Gelenkinnenteil (11) über einen Tripodestern verfügt,
b) der Tripodestern über einen Kugelkörper (17) aufweisende Zapfen (16) verfügt,
c) die Kugelkörper (17) jeweils in einer Ausnehmung (1() aus einem Druckstück (19) verschwenkbar gegenüber dem Druckstück (19) gelagert sind,
d) über das Druckstück (19) und über zwischen einer Lauffläche (21) des Druckstückes (19) und einer Gegenfläche (20) des Gelenkaußenteiles (12) angeordnete Wälzkörper (23) eine Übertragung des Antriebsmomentes zum Gelenkaußenteil (12) erfolgt,
**dadurch gekennzeichnet, dass**
e) die Lauffläche (21) des Druckstückes (19) in Laufrichtung der Wälzkörper (23) derart gekrümmt ist, dass sich der Abstand der Lauffläche von der ebenen Gegenfläche in Richtung der äußeren Teilbereiche verringert.

2. Tripodegelenk nach Anspruch 1,
**dadurch gekennzeichnet, dass**
die Lauffläche (21) des Druckstückes (19)im Einlaufbereich der Wälzkörper über Einlaufschrägen oder -radien verfügt.

## Claims

1. Tripod joint for the transmission of a drive torque between two drive elements of a drive train, with an inner joint part (11) and an outer joint part (12) containing the inner joint part, whereby
a) the inner joint part (11) is provided with a tripod star,
b) the tripod star is provided with trunnions (16) with spherical bodies (17),
c) each spherical body (17) is located in a recess (18) of a thrust member (19) and capable of pivoting relative to the thrust member (19),
d) the drive torque is transmitted to the outer joint part (12) through the thrust member (19) and through rolling bodies (23) located between a running surface (21) of the thrust member (19) and a mating surface (20) of the outer joint part (12),
**characterised in that**
e) the running surface (21) of the thrust member (19) is so curved in the running direction of the rolling bodies (23) that the distance of the running surface from the flat mating surface is reduced in the direction of the outer subdomains.

2. Tripod joint according to claim 1,
**characterised in that**
the running surface (21) of the thrust member (19) is provided with lead-in bevels or radii in the lead-in area of the rolling bodies.

## Revendications

1. Joint tripode pour transmettre un couple d'entraînement entre deux éléments d'entraînement d'une section d'entraînement, comportant une partie intérieure (11) du joint et une partie extérieure (12) du joint, qui loge la partie intérieure du joint, dans lequel
a) la partie intérieure (11) du joint comporte une étoile tripode,
b) l'étoile tripode comporte des embouts (16) possédant un corps sphérique (17),
c) les corps sphériques (17) sont logés chacun dans un logement (18) constitué par un organe de pression (19) de manière à pouvoir pivoter par rapport à l'organe de pression (19),
d) une transmission du couple d'entraînement à la partie extérieure (12) du joint est réalisée au moyen de l'organe de pression (19) et par l'intermédiaire d'un corps de roulement (23) qui est disposé entre une surface de roulement (21) de l'organe de pression (19) et une surface antagoniste (20) de la partie extérieure (12) du joint,
**caractérisé en ce que**
e) la surface de roulement (21) de l'organe de pression (19) est cintrée dans la direction de roulement des corps de roulement (23) de telle sorte que la distance entre la surface de roulement et la surface antagoniste plane diminue en direction des parties extérieures.

2. Joint tripode selon la revendication 1, **caractérisé en ce que** la surface de roulement (21) de l'organe de pression (19) possède, dans la zone d'entrée des corps de roulement, des biseaux ou des arrondis d'entrée.
